Europäisches Patentamt

European Patent Office

Office européen des brevets

(11) Veröffentlichungsnummer: **0 051 755**
**A1**

## (12) EUROPÄISCHE PATENTANMELDUNG

(21) Anmeldenummer: **81108167.8**

(22) Anmeldetag: **10.10.81**

(51) Int. Cl.³: **H 01 H 1/58, H 01 R 9/22**

(30) Priorität: **07.11.80 DE 3042029**

(43) Veröffentlichungstag der Anmeldung: **19.05.82**
**Patentblatt 82/20**

(84) Benannte Vertragsstaaten: **AT BE CH FR GB IT LI NL SE**

(71) Anmelder: **BROWN, BOVERI & CIE Aktiengesellschaft,
Kallstadter Strasse 1, D-6800 Mannheim 31 (DE)**

(72) Erfinder: **Goehle, Rolf, Ing. grad., Im Bubenwingert 16,
D-6906 Leimen (DE)**
Erfinder: **Schmitt, Volker, Ringstrasse 41,
D-6901 Bammental (DE)**

(74) Vertreter: **Kempe, Wolfgang, Dr. et al, c/o BROWN,
BOVERI & CIE AG Kallstadter Strasse 1,
D-6800 Mannheim-Käfertal (DE)**

(54) Abdeckvorrichtung zur Sicherung von Anschlussklemmen von elektrischen Installationsgeräten.

㊻ Eine Abdeckvorrichtung zur Sicherung von Anschluß-klemmen (28, 30, 32) von vorzugsweise in Installationsver-teilungen eingebauten elektrischen Installationsgeräten, insbesondere von Leitungsschutzschaltern, in Sockel-bauweise ist als Abdeckkappe (34, 36) ausgebildet, die im Querschnitt annähernd L-förmig ist. Zur Vereinfachung der Montage der Abdeckvorrichtung sind an der Innenseite des einen Schenkels (42) wenigstens eine federnde Nase (48), die im montierten Zustand hinter je einen Rücksprung (54) am Sockel (20), und an der Innenseite des anderen Schenkels (40) wenigstens ein Vorsprung (44), der im montierten Zustand in je eine Ausnehmung (52) am Installationsgerät greift, vorgesehen, wobei die Nase und der Vorsprung und dementsprechend auch der Rücksprung und die Ausnehmung angenähert senkrecht zueinander ausgerichtet sind.

C051755

-1-

B R O W N ,  B O V E R I  &  C I E   AKTIENGESELLSCHAFT
Mannheim                                4. November 1980
ZFE/P4-Ft/Ht                            Mp-Nr. 635/80

"Abdeckvorrichtung zur Sicherung von Anschlußklemmen von
elektrischen Installationsgeräten"

Die Erfindung betrifft eine Abdeckvorrichtung zur Sicherung
von Anschlußklemmen von vorzugsweise in Installationsverteilungen eingebauten elektrischen Installationsgeräten, insbesondere von Leitungsschutzschaltern in Sockelbauweise.

Die Anschlußklemmen von elektrischen Leitungsschutzschaltern,
die in Installationsverteilungen eingebaut sind, werden im allgemeinen dadurch abgedeckt, daß eigene Abdeckbleche bzw. eigene Abdeckwände an den Installationsverteilungen vorgesehen
sind, die Ausnehmungen aufweisen, durch die die Oberteile der
Installationsgeräte bzw. der Leitungsschutzschalter herausragen.
Bei Installationsverteilungen, die derartige Abdeckbleche nicht
aufweisen, liegen die Anschlußklemmen der Leitungsschutzschalter im allgemeinen frei, so daß eine Berührung nicht ausgeschlossen ist.

Bei Schützen sind zwar Abdeckkappen bekannt geworden, die oberhalb der Anschlußklemmen am Schützengehäuse verrastet werden können. Diese haben aber nicht die Aufgabe, die Anschlußklemmen abzudecken, sondern dienen lediglich dazu, ein vollständiges Herausschrauben der Anschlußklemmen zu verhindern, d. h. also, die Anschlußklemmen bzw. die Klemmschrauben unverlierbar zu machen.

Aufgabe der Erfindung ist es daher, eine Abdeckvorrichtung der eingangs genannten Art zu schaffen, die dort Verwendung findet, wo eigene Abdeckbleche an der Installationsverteilung nicht vorhanden sind, wobei die Vorrichtung leicht montierbar und demontierbar ausgebildet sein soll.

Diese Aufgabe wird erfindungsgemäß dadurch gelöst, daß die Abdeckvorrichtung eine Abdeckkappe ist, die im Querschnitt annähernd L-förmig ausgebildet, daß an der Innenseite des einen Schenkels wenigstens eine federnde Nase, die im montierten Zustand hinter je einen Rücksprung und an der Innenseite des anderen Schenkels wenigstens ein Vorsprung, der im montierten Zustand in je eine Ausnehmung am Installationsgerät greift, vorgesehen sind, wobei die Nase und der Vorsprung und dementsprechend auch der Rücksprung und die Ausnehmung angenähert senkrecht zueinander ausgerichtet sind.

Diese im Querschnitt annähernd L-förmige Abdeckkappe, deren einer Schenkel, und zwar der längere Schenkel, die Klemmschrauben überdeckt, ist leicht zu montieren, in dem sie mit ihrer Nase bzw. ihren Nasen und ihrem Vorsprung in die entsprechenden Rücksprünge bzw. in die entsprechenden Ausnehmungen eingeschnappt wird.
Um eine weitere Verbesserung der Halterung zu erzielen, kann an dem Ende des Schenkels, der die Klemmschraube überdeckt, ein Zapfen angeformt sein, der hinter einen Abstützungsvorsprung am Installationsgerät im montierten Zustand greift.

- 3 -

Dadurch sind drei Stellen zur Halterung vorgesehen, von denen zwei, nämlich die Nasen und die Vorsprünge, alleine ausreichen würden, die Abdeckkappe am Installationsgerät zu halten; die dritte Stelle - Zapfen hinter dem Abstützungsvorsprung - hat den Zweck, ein Aufbiegen der Abdeckkappe oberhalb der Klemmschrauben zu vermeiden. Darüberhinaus wird durch die drei Stellen zur Halterung erreicht, daß die Demontage mit einem Werkzeug vorgenommen werden muß.

Es ist günstig, die wenigstens eine Nase und den wenigstens einen Vorsprung bzw. die zugehörigen Rücksprünge und die Ausnehmungen zueinander versetzt zwischen zwei nebeneinander liegenden Klemmen bzw. Klemmschrauben anzuordnen. Dadurch wird die Stabilität der Halterung verbessert. Darüberhinaus wird auch die Montage und die Demontage erleichtert. Dies ist darauf zurückzuführen, daß die Nase und der Vorsprung bzw. die Nasen und die Vorsprünge sich nicht gegenseitig behindern, wenn die Abdeckkappe aufgeschnappt wird.

Es ist weiterhin günstig, den wenigstens einen Zapfen und den wenigstens einen Abstützungsvorsprung jeweils im Bereich einer Klemme bzw. einer Klemmschraube oberhalb derselben anzuordnen. Dadurch wird die Halterung insgesamt weiter verbessert.

Eine weitere vorteilhafte Ausgestaltung der Erfindung kann dahin gehen, an der Außenfläche des die Klemmschrauben nicht überdeckenden Schenkels einen Schlitz anzuordnen, der parallel zu der Schenkelaußerfläche des Schenkels an dem er angeformt ist und senkrecht zu dem die Klemmschrauben abdeckenden Schenkels verläuft. Dieser Schlitz dient zur Aufnahme eines Werkzeuges, so daß die Abdeckkappe mittels des Werkzeuges elastisch verformt und dadurch leicht demontiert werden kann. Der Schlitz kann dadurch gebildet werden, daß an der Außenfläche desjenigen Schenkels, der die Klemmschrauben nicht überdeckt, zwei in Abstand zueinander angeordnete Leisten angeformt sind, die parallel zur Klemmschraubenachse verlaufen, welche beiden Leisten von einer Querleiste überbrückt sind, daß zwischen der Innenfläche der Querleiste und der Außenfläche des Schenkels der Schlitz gebildet ist.

Wenn das Gehäuse des Installationsgerätes aus einem sockelartigen Gehäuseunterteil und einem Gehäuseoberteil gebildet ist, dann besteht die Möglichkeit, den wenigstens einen Rücksprung und die wenigstens eine Ausnehmung an den Sockel bzw. Gehäuseunterteil und den Abstützungsvorsprung am Gehäuseoberteil anzuformen.

Anhand der Zeichnung, in der ein Ausführungsbeispiel der Erfindung dargestellt ist, sollen die Erfindung sowie weitere vorteilhafte Ausgestaltungen und Verbesserungen näher erläutert werden.

Es zeigt:

Figur 1    eine Ansicht auf eine Breitseitenfläche eines Installationsgerätes mit zwei erfindungsgemäßen Abdeckkappen,

Figur 2    eine Ansicht auf eine Schmalseitenfläche des Installationsgerätes gemäß Figur 1,

Figur 3    eine Schnittansicht gem. der Schnittlinie A-A der Figur 1,

Figur 4    eine Schnittansicht gemäß der Schnittlinie B-B der Figur 6,

Figur 5    eine Schnittanischt gem. Linie C-C der Fig. 6 und

Figur 6    eine Ansicht gem. Pfeil D der Fig. 5.

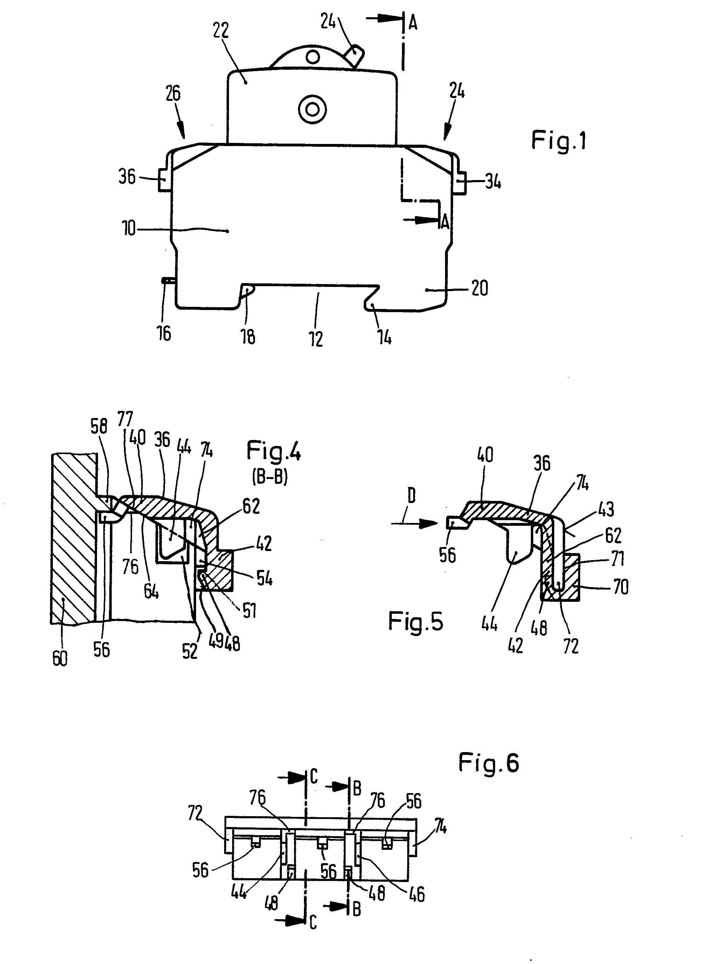

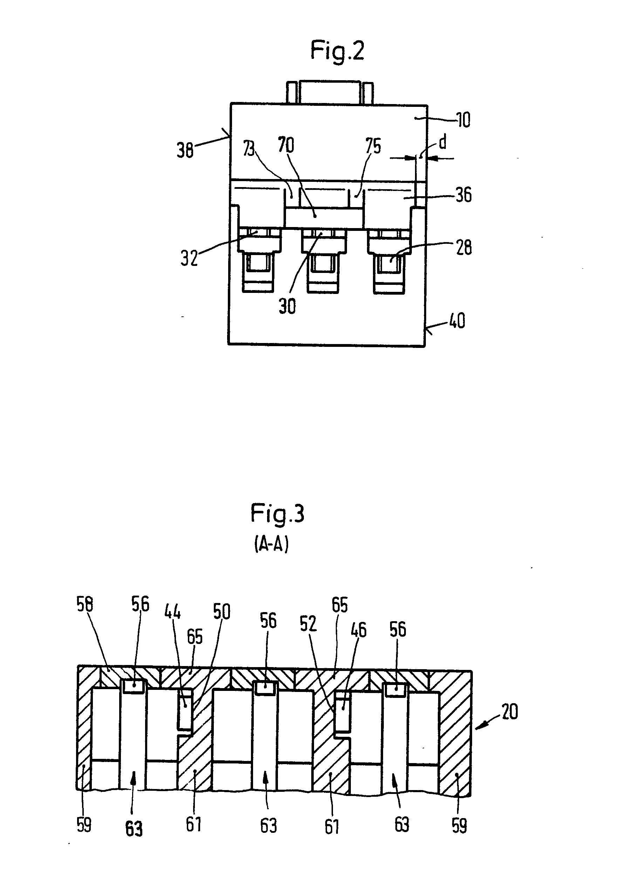

Die Figur 1 zeigt eine Seitenansicht eines Leitungsschutzschalters 10, der an seiner Bodenfläche eine U-förmige Ausnehmung 12 mit einer festen Nase 14 und einer an einem Schieber 16 angeordneten beweglichen Nase 18 aufweist, derart, daß der Leitungsschutzschalter auf eine weiter nicht dargestellte hutprofilförmige Tragschiene aufgeschnappt werden kann. Der Leitungsschutzschalter 10 besitzt einen Sockelabschnitt 20 und ein Gehäuseoberteil 22, aus dem ein Schaltknebel 24 herausragt. Ansich ist ein derartiger Leitungsschutzschalter bekannt.

In den Bereichen 24 bzw. 26 befinden sich Klemmschrauben 28, 30, 32 (vgl. Figur 2), von denen die Schraubenschäfte, nicht aber die Schraubenköpfe zu sehen sind. Diese Klemmschrauben sind mittels zweier Abdeckkappen 34 und 36 abgedeckt. In der Figur 2 ist lediglich die Abdeckkappe 36 zu sehen. Diese Abdeckkappe 36 schließt exakt mit der linken Breitseitenfläche 38 ab endet an der gegenüberliegenden Breitseitenfläche in einem Abstand d von der Breitseitenfläche 40.

In den Figuren 4 und 5 erkennt man die Abdeckkappe 34 im Querschnitt. Diese ist annähernd L-förmig ausgebildet und besitzt einen längeren Schenkel 40 und einen geringfügig kürzeren Schenkel 42. Am Schenkel 40 befinden sich zwei Vorsprünge 44 und 46 (in der Figur 4 ist nur der Vorsprung 44 zu sehen, wogegen in den Figuren 3 und 6 beide Vorsprünge erkennbar sind) und an der Innenfläche des anderen Schenkels befinden sich zwei Nasen 48 (siehe Fig. 4 bis 6).

Die Nasen 48 sind in an der Innenfläche des Schenkels 42 angeformten Nuten 62 angeordnet und zwar im Bereich des freien Endes des Schenkels 42. Sie sind sägezahnförmig ausgebildet, wobei die Schrägfläche 49 zum freien Schenkelende hin gerichtet ist, wogegen die Steilfläche 51 zur Innenfläche des Schenkels 40 hinweist.

Aus der Figur 6 ist ersichtlich, daß der Vorsprung 44 und die Nase 48 gegeneinander versetzt sind, wobei sich der Vorsprung 44 außerhalb der Nase 48 befindet bzw. die beiden Vorsprünge 44 die beiden Nasen 48 zwischen sich nehmen.

In dem Bereich, in dem sich der Vorsprung 44 bzw. die Nase 48 befindet, ist eine Ausnehmung 76 an der Innenfläche des Schenkels 40 angeformt, die mit der oberen Fläche 64 des Sockels fluchtet und genau in einer Linie liegt mit der Wand 62. In der Figur 6 ist diese Ausnehmung ebenfalls ersichtlich. Die dabei gebildete Schrägfläche 77 dient der besseren Führung und der Anlage der Abdeckkappe 34 auf der Sockelfläche 64.

Die Abdeckkappe ist aus Kunststoff geformt, insbesondere aus Spritzguß hergestellt.

Die Vorsprünge 44 und 46 sind ebenfalls im Bereich der Nut 62 angeformt, liegen aber außerhalb des Bereiches, der von den Nasen 48 überdeckt wird. Dadurch sind die Nasen 48 bzw. die Vorsprünge 44 und 46 gegeneinander versetzt, was zu einer Verbesserung der Montage dient, da sich beide beim Montieren nicht behindern. Darüber hinaus ist diese Anordnung auch herstellungsbedingt.

An dem Schenkelende des Schenkels 40 sind Zapfen 56 angefformt, von denen der mittlere annähernd in der Mitte zwischen den beiden Vorsprüngen 44 und 46 liegt und die beiden äußeren jeweils annähernd in der Mitte zwischen den Enden der Abdeckkappe und den Vorsprüngen 44 bzw. 46 liegen.

Insgesamt sind drei Zapfen 56 vorgesehen, die unter jeweils drei Abstützungsvorsprünge 58 an dem Leitungsschutzschalter greifen. Beidseitig an den Schenkeln 40 und 42 ist eine Abschlußwand 72 bzw. 74 vorgesehen, die der Schräge der Sockelfläche 64 angepaßt ist. In den Figuren 4 und 5 ist die Wand 74 ebenfalls ersichtlich.

An dem Installationsgehäuse befinden sich Ausnehmungen 50 und 52, in die die Vorsprünge 44 und 46 eingreifen, wogegen an der Aussenfläche des Sockelunterteiles 20 Rücksprünge 54 vorgesehen sind. Wie erwähnt, greifen die Vorsprünge 44 und 46 in die Ausnehmungen 50 und 52 und darüber hinaus fassen die Nasen 48 mit ihren Flächen 51 hinter die Rücksprünge 54 am Sockel des Leitungsschutzschaltergehäuses, wodurch die Abdeckkappe oberhalb der Klemmschrauben festgehalten ist. An dem Gehäuseunterteil bzw. an einer am Gehäuseunterteil angeordneten Wand 60 sind Abstützungsvorsprünge 58 vorgesehen, hinter die die Zapfen 56 greifen. Dadurch wird eine Dreipunkthalterung erreicht, was die Festlegung der Abdeckkappe am Installationsgerätegehäuse verbessert, und durch die Zapfen 56 wird verhindert, so daß der Schenkel 40 leicht aufgebogen werden kann.

Um eine optimale Montage zu erreichen, ist die obere, an das Oberteil anschliessende Fläche 64 des Sockels abgeschrägt; der Winkel ist ein spitzer Winkel zur Horizontalen und zur Verbindungslinie der sich gegenüberliegenden Klemmschrauben.

Es sei nun Bezug genommen auf die Figur 3. Das Schaltgerät ist gebildet aus einem Sockel und einem Gehäuseoberteil. Der Sockel besitzt im Bereich der Klemmschrauben je eine Abschlußwand 59 und zwei Zwischenwände 61, die zwischen sich jeweils einen Raum 63 zur Aufnahme der Klemmschrauben bilden. Die Zwischenwände 61 sind nach außen hin annähernd T-förmig erweitert, wobei die freien Enden dieser erweiterten Bereiche 65 von den Abschlußwänden 59 und voneinander in einem Abstand liegen, in dem jeweils ein Vorsprung 58 an einer Abschlußwand 60 am Gehäuseoberteil eingreifen. Man kann sagen, daß die Räume zur Aufnahme der Klemmschrauben zur Innenseite des Installationsgerätes durch die Wand 60 des Gehäuseoberteiles und seitlich durch die Wände 59 bzw. 61 am Gehäuseunterteil begrenzt werden. Die Vorsprünge 58 dienen dabei als Abstützungsvorsprünge 58 und besitzen Nuten 59, in die die Zapfen 56 der Abdeckkappe eingreifen.

Es ist selbstverständlich, daß die Form des Leitungsschutzschalters nicht so sein muß, wie eben beschrieben, sondern daß die Abschlußwände 59, die Zwischenwände 61 und die Wände 60 mit den Vorsprüngen 58 jeweils einstückig zusammenhängen, so daß die Abstützungsvorsprünge 58 am Installationsgerätegehäuse bzw. am Unterteil des Installationsgerätegehäuses zusammen mit den Zwischwenwänden 61 und den Abschlußwänden 59 vorhanden sind.

Die Figur 5 zeigt eine Schnittansicht gem. der Schnittlinie C-C der Figur 6. Man erkennt den Schenkel 40 der Abdeckkappe 34 mit der Nase 56, die gegenüber dem Schenkel 40 schlanker ausgebildet und nach unten abgekröpft ist. Ferner erkennt man den angeformten Vorsprung 44 und die Nase 48, wobei die selbe sich innerhalb der Ausnehmung 42 befindet, die in dieser Schnittansicht nicht sichtbar ist. Auf der Außenseite des Schenkels 42 ist ein Fortsatz 70 vorgesehen, der angenähert ein Drittel der gesamten Breite der Abdeckkappe überdeckt (vgl. Figur 2). Zwischen der Außenfläche 43 des Schenkels 42 und der Innenfläche 71 des Vorsprunges oder der Ausformung 70 ist ein Schlitz 72 vorgesehen, der dazu dient, die Abdeckkappe einfacher zu demontieren.

Der Fortsatz 70 liegt dabei quer über zwei Leisten 73 und 75, welche Leisten parallel zu den Achsen der Klemmschrauben 28 bis 32 verlaufen und in Abstand zueinander angeordnet sind.

Mp.-Nr. 635/80                                    4. 11. 1980

Ansprüche

1. Abdeckvorrichtung zur Sicherung von Anschlußklemmen von vorzugsweise in Installationsverteilungen eingebauten elektrischen Installationsgeräten, insbesondere von Leitungsschutzschaltern, in Sockelbauweise, <u>dadurch gekennzeichnet,</u> daß die Abdeckvorrichtung eine Abdeckkappe (34, 36) ist, die im Querschnitt annähernd L-förmig ausgebildet, daß an der Innenseite des einen Schenkels (42) wenigstens eine federnde Nase (48), die im montierten Zustand hinter je einen Rücksprung (54) am Sockel (20), und an der Innenseite des anderen Schenkels (40) wenigstens ein Vorsprung (44), der im montierten Zustand in je eine Ausnehmung (52) am Installationsgerät greift, vorgesehen sind, wobei die Nase und der Vorsprung und dementsprechend auch der Rücksprung und die Ausnehmung angenähert senkrecht zueinander ausgerichtet sind.

2. Abdeckvorrichtung nach Anspruch 1, dadurch gekennzeichnet, daß am Ende des Schenkels (40), der die Klemmschraube überdeckt, wenigstens ein Zapfen (56) angeformt ist, der hinter wenigstens einen Abstützungsvorsprung (58) am Installationsgerätegehäuse (60) in montiertem Zustand greift.

3. Abdeckvorrichtung nach einem der vorigen Ansprüche, dadurch gekennzeichnet, daß die wenigstens eine Nase (48) und der wenigstens eine Vorsprung (44) bzw. der Rücksprung (54) und die Ausnehmung (52) zueinander versetzt zwischen zwei nebeneinander liegenden Klemmen (28 bis 32) angeordnet sind.

4. Abdeckvorrichtung nach einem der vorigen Ansprüche dadurch gekennzeichnet, daß der wenigstens eine Zapfen (56) und der wenigstens eine Vorsprung (58) jeweils im Bereich einer Klemme (28, 30, 32) oberhalb derselben angeordnet sind.

5. Abdeckvorrichtung nach einem der vorigen Ansprüche, dadurch gekennzeichnet, daß an der Außenwand des parallel zur Klemmschraubenachse verlaufenden Schenkels ein Schlitz (72) angeordnet ist, der zur Aufnahme eines Werkzeuges zwecks Demontage der Abdeckkappe dient.

1/2

Fig.1

Fig.4
(B-B)

Fig.5

Fig.6

Fig.2

Fig.3
(A-A)

0051755

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | FR - A - 2 137 476 (PARIS & CO.) | | H 01 H 1/58 |
| | * Seite 2, Zeilen 18-29 * | 1 | H 01 R 9/22 |
| A | DE - A - 2 832 449 (C.E.A.G.) | | |
| | * Seite 8, Absatz 1 * | 1 | |
| A | CH - A - 463 590 (ZUMTOBEL) | | |
| | * Spalte 4, Zeilen 14-25 * | 1 | |
| E | DE - A - 3 004 211 (BROWN BOVERI) | | RECHERCHIERTE SACHGEBIETE (Int. Cl.³) |
| | * Seite 5, Zeilen 30-36 * | 1 | H 01 H 1/58 |
| | | | 71/08 |
| | | | H 01 R 4/70 |
| | | | 9/16 |
| | | | 9/22 |
| | | | H 02 B 1/06 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10.02.1982 | LIBBERECHT |

EPA form 1503.1 06.78